# EUROPEAN PATENT APPLICATION

(11) **EP 4 779 388 A1**
(43) Date of publication of application: **22.07.2026**
(21) Application number: 26152717.0
(22) Date of filing: 19.01.2026
(51) Int. Cl.: G02B 26/12

(54) **OPTICAL SCANNING DEVICE AND IMAGE FORMING APPARATUS INCLUDING THE SAME**

(30) Priority: 20.01.2025 JP 2025007974
(71) Applicant: Kyocera Document Solutions Inc., Osaka-shi, Osaka 540-8585 (JP)
(72) Inventor: Mizutani, Hideji, Osaka, 540-8585 (JP); Yoshida, Shingo, Osaka, 540-8585 (JP); Mori, Hayato, Osaka, 540-8585 (JP)
(74) Representative: BRP Renaud & Partner mbB Rechtsanwälte Patentanwälte Steuerberater

(57) **Abstract**

A light emitting module includes a laser diode and a bracket. The laser diode has a plurality of light emitting points emitting a laser beam. The bracket has a holding hole holding the laser diode. The bracket is fixed to the outer circumferential surface of a circumferential wall part with the laser diode inserted in a light entrance hole formed in the circumferential wall part. The circumferential wall part has a protruding part protruding from the circumferential part of the light entrance hole toward the bracket. The bracket has a recessed part recessed from a circumferential part of the holding hole in a direction away from the circumferential wall part with the protruding part disposed in the recessed part receiving. A space formed between the bracket and the circumferential wall part bends in a direction opposite to the emission direction of the laser beam between the recessed and protruding parts.

## Description

### BACKGROUND

The present disclosure relates to an optical scanning device and an image forming apparatus including the same.

Conventional optical scanning devices include a light source unit, a collimator lens, a polygon mirror, and an accommodating portion. The light source unit has a light emitting module that emits laser light. The collimator lens collimates the laser light emitted from the light source unit into a parallel light beam. The polygon mirror rotates about a rotation axis extending along the top-bottom direction to reflect the laser light emitted from the light source unit to scan the circumferential surface of an image carrying member in a main scanning direction. The accommodating portion houses the light source unit, the collimator lens, and the polygon mirror.

Inconveniently, in the above configuration, as the polygon mirror rotates at high speed, the internal pressure of the accommodating portion drops, which may draw dust from outside the accommodating portion into it. This can cause contamination of the mirror surface of the polygon mirror with fine particles, leading to degraded optical performance such as reduced reflectance.

In view of the above inconveniences, an object of the present disclosure is to provide an optical scanning device that can suppress degradation of optical performance and an image forming apparatus including the same.

### SUMMARY

To attain the above object, according to the present disclosure, a first configuration includes a light source unit, a collimator lens, a polygon mirror, and an accommodating portion. The light source unit has a light emitting module that emits a laser beam. The collimator lens collimates the laser beam emitted from the light source unit into a parallel light beam. The polygon mirror rotates about a rotation axis extending along the top-bottom direction to reflect the laser beam emitted from the light source unit to scan the circumferential surface of an image carrying member in a main scanning direction. The accommodating portion houses the light source unit, the collimator lens, and the polygon mirror. The accommodating portion has a bottom wall part and a circumferential wall part. The bottom wall part stretches in a direction crossing the rotation axis of the polygon mirror. The circumferential wall part protrudes from a circumferential part of the bottom wall part and surrounds, from radially outside, the collimator lens and the polygon mirror. The light emitting module includes a laser diode and a bracket. The laser diode has a plurality of light emitting points that emit the laser beam. The bracket has a holding hole that holds the laser diode. The bracket is fixed to the outer circumferential surface of the circumferential wall part with the laser diode inserted in a light entrance hole formed in the circumferential wall part. The circumferential wall part has a protruding part that protrudes from a circumferential part of the light entrance hole toward the bracket. The bracket has a recessed part recessed from a circumferential part of the holding hole in a direction away from the circumferential wall part with the protruding part disposed in the recessed part receiving. A space formed between the bracket and the circumferential wall part bends in a direction opposite to the emission direction of the laser beam between the recessed part and the protruding part.

With the first configuration according to the present disclosure, it is possible to provide an optical scanning device that can suppress degradation of optical performance and to provide an image forming apparatus including the same..

### BRIEF DESCRIPTION OF THE DRAWINGS

Fig. 1 is a schematic sectional view of the internal construction of an image forming apparatus 100 according to one embodiment of the present disclosure.
Fig. 2 is a top view of an optical scanning device 5 according to the embodiment of the present disclosure.
Fig. 3 is a side sectional view of the internal configuration of the optical scanning device 5 according to the embodiment of the present disclosure.
Fig. 4 is an enlarged perspective view around a light source unit 26 in the optical scanning device 5 according to the present disclosure.
Fig. 5 is an enlarged perspective view around the light source unit 26 in the optical scanning device 5 according to the present disclosure.
Fig. 6 is an enlarged perspective view around a light emitting module 261 in the optical scanning device 5 according to the present disclosure.
Fig. 7 is an enlarged side sectional view around the light emitting module 261 in the optical scanning device 5 according to the present disclosure.

### DETAILED DESCRIPTION

### [1. Configuration of Image Forming Apparatus 100]

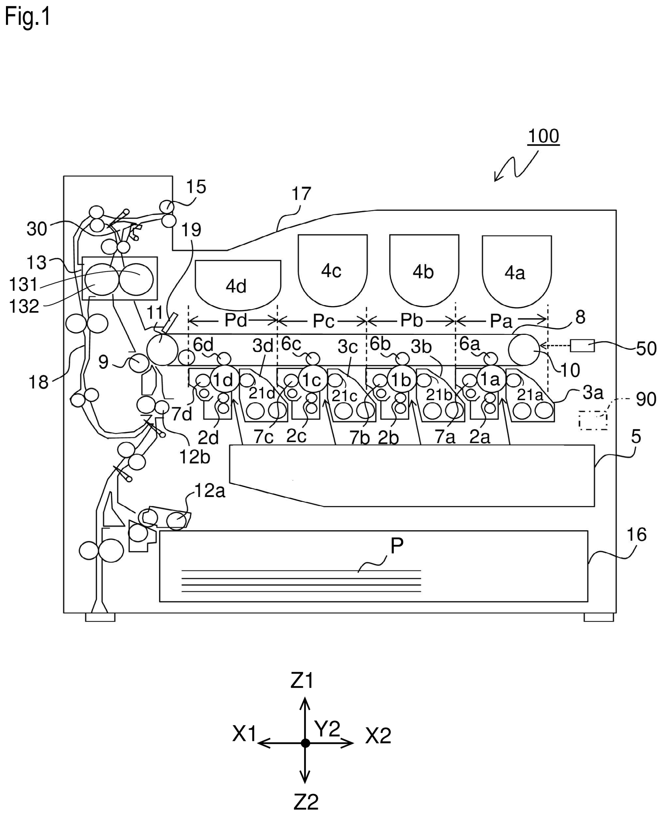

An embodiment of the present disclosure will be described below with reference to the accompanying drawings. Fig. 1 is a schematic sectional view of the overall configuration of an image forming apparatus 100 that incorporates an optical scanning device 5 according to the present disclosure. For convenience, the vertical direction with the image forming apparatus 100 installed in a usable state (i.e., the state shown in Fig. 1) is defined as the top-bottom direction (direction Z1-Z2). In addition, with the face of the image forming apparatus 100 at the near side of the plane in Fig. 1 defined as its front face (frontage), the front-rear direction (direction Y1-Y2) is defined. In addition, with the front face of the image forming apparatus 100 in the installed state taken as a reference, the left-right direction (direction X1-X2) is defined. In the embodiment, the left-right direction (direction X1-X2) is orthogonal to the top-bottom direction (direction Z1-Z2) and to the front-rear direction (direction Y1-Y2).

The image forming apparatus 100 is a tandem-type color printer and includes image forming portions Pa, Pb, Pc, and Pd, an optical scanning device 5, photosensitive drums (image carrying members) 1a to 1d, charging devices 2a to 2d, developing devices 3a to 3d, primary transfer rollers 6a to 6d, a secondary transfer roller 9, a sheet cassette 16, a fixing device 13, an image density sensor 50, and a control portion 90.

The four image forming portions Pa, Pb, Pc, and Pd are arranged in the body of the image forming apparatus 100 in this order from upstream (right side in Fig. 1) in the conveyance direction. The image forming portions Pa to Pd are provided so as to correspond to images of four different colors (yellow, magenta, cyan, and black) and sequentially form a yellow, a magenta, a cyan, and a black image, respectively, each through the processes of electrostatic charging, exposure to light, image development, and image transfer.

Used as the photosensitive drums 1a to 1d is an organic photosensitive member (OPC photosensitive member) having an organic photosensitive layer formed on it, an amorphous silicon photosensitive member having an amorphous silicon photosensitive layer formed on it, or the like. The photosensitive drums 1a to 1d are arranged in tandem so as to correspond to the different colors, namely yellow, magenta, cyan, and black.

Around the photosensitive drum (image carrying member) 1a, the developing device 3a, the charging device 2a, and a cleaning device 7a are arranged. Similarly, around the photosensitive drums 1b to 1d, the developing devices 3b to 3d, the charging devices 2b to 2d, and the cleaning devices 7b to 7d are arranged, respectively. The optical scanning device 5 is arranged below the developing devices 3a to 3d.

The developing devices 3a to 3d are disposed opposite the photosensitive drums (image carrying members) 1a to 1d and include development rollers (developer carrying members) 21a to 21d. The developing devices 3a to 3d apply a predetermined development voltage to the development rollers (developer carrying members) 21a to 21d to attach toner to electrostatic latent images formed on the photosensitive drums (image carrying members) 1a to 1d to form toner images. The developing devices 3a to 3d face the photosensitive drums 1a to 1d, respectively, and feed toner to the photosensitive drums 1a to 1d. The developing devices 3a to 3d include containers 4a to 4d that store toners of different colors, namely magenta, cyan, yellow, and black, respectively.

The charging devices 2a to 2d are disposed upstream of the developing devices 3a to 3d with respect to the rotation direction of the photosensitive drums 1a to 1d and face the surfaces of the photosensitive drums 1a to 1d, respectively. The charging devices 2a to 2d electrostatically charge uniformly the surfaces of the photosensitive drums 1a to 1d, respectively.

The cleaning devices 7a to 7d remove developer (toner) and the like left on the photosensitive drums 1a to 1d.

In the embodiment, the optical scanning device 5 is disposed below the photosensitive drums 1a to 1d. Based on image data of, for example, letters or patterns fed to an image input portion from a personal computer or the like, the optical scanning device 5 shines light to (scans with light) the surfaces of the photosensitive drums 1a to 1d electrostatically charged uniformly by the charging devices 2a to 2d. This forms electrostatic latent images on the surfaces of the photosensitive drums 1a to 1d.

An intermediate transfer belt (belt) 8 is provided adjacent to the image forming portions Pa to Pd. The toner images formed on the photosensitive drums 1a to 1d are primarily transferred sequentially to the intermediate transfer belt 8 moving while in contact with the photosensitive drums 1a to 1d so as to be overlayed on each other.

The toner images primarily transferred to the intermediate transfer belt 8 are secondarily transferred to a sheet P (recording medium) as one example of a recording medium by the secondary transfer roller 9. The sheet P having the toner images secondarily transferred to it then has the toner images fixed in the fixing device 13 to be discharged out of the body of the image forming apparatus 100.

The sheet P to which the toner images are secondarily transferred is stored in the sheet cassette 16 disposed in a lower part of the body of the image forming apparatus 100 and is conveyed via a sheet feed roller 12a and a pair of registration rollers 12b to a nip portion between the secondary transfer roller 9 and a drive roller 11 for the intermediate transfer belt 8. A belt cleaner 19 in a blade form is disposed downstream of the secondary transfer roller 9 to remove toner and the like left on the surface of the intermediate transfer belt 8.

When image data is input from a host device such as a personal computer, first, the charging devices 2a to 2d electrostatically charge the surfaces of the photosensitive drums 1a to 1d uniformly. Then, the optical scanning device 5 shines light based on the image data to form electrostatic latent images according to the image data on the photosensitive drums 1a to 1d. The developing devices 3a to 3d are loaded with predetermined amounts of two-component developer containing toner of the different colors, namely yellow, magenta, cyan, and black, respectively. Note that, when as toner images are formed as will be described later the proportion of toner in two-component developer loaded in the developing devices 3a to 3d falls below a prescribed value, toner is supplied from the containers 4a to 4d to the developing devices 3a to 3d. The toner in the developer is fed to the photosensitive drums 1a to 1d by the developing devices 3a to 3d and electrostatically attaches to them. This forms toner images corresponding to the electrostatic latent images formed by exposure to light from the optical scanning device 5.

Then the primary transfer rollers 6a to 6d produce electric fields with a predetermined transfer voltage between the primary transfer rollers 6a to 6d and the photosensitive drums 1a to 1d so as to primarily transfer the yellow, magenta, cyan, and black toner images on the photosensitive drums 1a to 1d to the intermediate transfer belt 8. These images of four colors are formed in a predetermined positional relationship determined in advance so as to form a predetermined full-color image. Then, in preparation for the subsequent formation of new electrostatic latent images, the toner and the like left on the surfaces of the photosensitive drums 1a to 1d after primary transfer are removed by the cleaning devices 7a to 7d.

The intermediate transfer belt 8 is wound around a driven roller 10, upstream, and a drive roller 11, downstream. As the drive roller 11 is rotated by a belt drive motor (not shown), the intermediate transfer belt 8 starts to rotate clockwise. Then, the sheet P is conveyed with predetermined timing from the pair of registration rollers 12b to the nip portion (secondary transfer nip portion) between the drive roller 11 and the secondary transfer roller 9 provided adjacent to it, and the full-color image on the intermediate transfer belt 8 is secondarily transferred to the sheet P. The sheet P with the toner image secondarily transferred to it is conveyed to the fixing device 13.

The image density sensor 50 faces the driven roller 10 across the intermediate transfer belt 8. The image density sensor 50 is, for example, a mirror reflection sensor that senses reflected light. The image density sensor 50 converts a measurement result into an electrical signal to output it to the control portion 90, which will be described later. Note that the image density sensor 50 needs only be a sensor that can sense density information on the toner image; it can be, for example, a sensor that recognizes density from an image taken of the toner image.

The sheet P conveyed to the fixing device 13 is heated and pressed by a fixing belt 131 and a pressing roller 132 to fix the toner image to the surface of the sheet P, thereby forming the predetermined full-color image. The sheet P having the full-color image formed on it has its conveyance direction switched by a branching portion 30 branching into a plurality of directions to be discharged as it is (or after being conveyed to a reversing conveyance passage 18 and having images formed on both sides) to a discharge tray 17 by a pair of discharging rollers 15.

The control portion 90 comprehensively controls the image forming apparatus 100. Specifically, the control portion 90 controls the image forming portion. The image forming portion includes the optical scanning device 5, the photosensitive drums (image carrying members) 1a to 1d, the charging devices 2a to 2d, and the developing devices 3a to 3d.

### [2. Configuration of Optical Scanning Device]

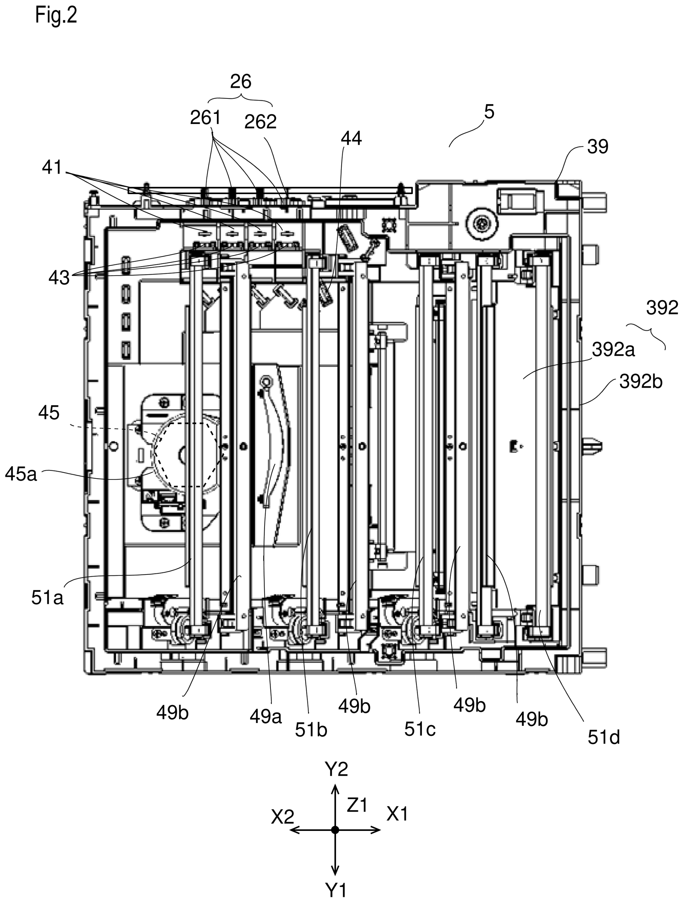

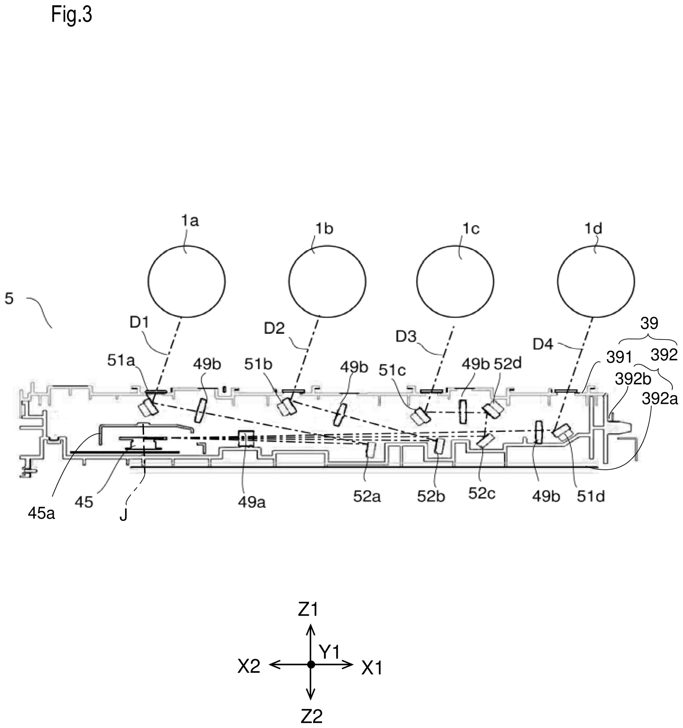

Fig. 2 is a top view of the optical scanning device 5, showing a state with a lid portion 391 removed. Fig. 3 is a side sectional view of the internal configuration of the optical scanning device 5. Note that part of Fig. 3 only schematically illustrates the structures of individual members, and does not necessarily illustrate their shapes and positional relationships precisely.

Note that, in the following description, a main scanning direction (direction Y1-Y2) is the longitudinal direction of reflection mirrors 52a to 52d; the main scanning direction (direction Y1-Y2) coincides with the direction along which the rotation axes of the photosensitive drums 1a to 1d extend and the front-rear direction of the image forming apparatus 100. A subsidiary scanning direction (direction Z1-Z2) is a direction parallel to the rotation axis J of the polygon mirror 45 and coincides with the top-bottom direction of the image forming apparatus 100. The left-right direction (direction X1-X2) is a direction orthogonal to the main scanning direction (direction Y1-Y2) and to the subsidiary scanning direction (direction Z1-Z2) and coincides with the direction along which the reflection mirrors 52a to 52d are arrayed.

The optical scanning device 5 outputs (shines) a plurality of (in the embodiment, four) laser beams D1 to D4 modulated based on image signals to the photosensitive drums 1a to 1d to expose the surfaces of the photosensitive drums 1a to 1d to those beams, respectively, to form electrostatic latent images through attenuation of electric charge.

The optical scanning device 5 includes a housing 39, a light source unit 26, a collimator lens 41, a cylindrical lens (not shown), a first aperture 43 and a second aperture 44, a polygon mirror 45, a plurality of scanning lenses 49a and 49b, output mirrors 51a to 51d, and reflection mirrors 52a to 52d.

The housing 39 has a lid portion 391 and a accommodating portion 392. The lid portion 391 covers the open top face of the accommodating portion 392. The accommodating portion 392 is formed substantially in a quadrilateral shape as seen from above. The accommodating portion 392 houses the collimator lens 41, the cylindrical lens (not shown), the first and second apertures 43 and 44, the polygon mirror 45, the plurality of scanning lenses 49a and 49b, the output mirrors 51a to 51d, and the reflection mirrors 52a to 52d.

The accommodating portion 392 has a bottom wall part 392a and a circumferential wall part 392b. The bottom wall part 392a stretches in a direction crossing the rotation axis J of the polygon mirror. In the embodiment, the bottom wall part 392a stretches in a direction orthogonal to the rotation axis J of the polygon mirror 45. The circumferential wall part 392b protrudes upward Z1 from a circumferential part of the bottom wall part 392a such that a top end part of it reaches the lid portion 391. The circumferential wall part 392b surrounds from radially outside the collimator lens 41, the cylindrical lens (not shown), the first and second apertures 43 and 44, the polygon mirror 45, the plurality of scanning lenses 49a and 49b, the output mirrors 51a to 51d, and the reflection mirrors 52a to 52d.

The light source unit 26 includes a light emitting module 261 that emits a laser beam and a circuit board 262. In the embodiment, four light emitting modules 261 and four collimator lenses 41 are provided so as to correspond to the image forming portions Pa to Pd, respectively. The light emitting modules 261 emit the laser beams D1 to D4 corresponding to the image forming portions Pa to Pd, respectively (see Fig. 3). The collimator lens 41 collimates the laser beam D1 to D4 emitted from the light emitting module 261 into a substantially parallel light beam (collimated beam).

The polygon mirror 45 reflects the plurality of laser beams D1 to D4 respectively emitted from the light emitting modules 261 to scan the scanned surfaces of the photosensitive drums (image carrying members) 1a to 1d corresponding to the light source units 26, respectively. This allows the single polygon mirror 45 to scan the plurality of photosensitive drums 1a to 1d and helps reduce the number of components and hence the manufacturing cost of the optical scanning device 5. Note that the polygon mirror 45 is covered by a mirror cover 45a (see Fig. 3). This helps prevent contamination of the mirror face of the polygon mirror 45 with fine particles leading to a drop in its reflectance.

The cylindrical lens (not shown) has a predetermined refractive power over the laser beams D1 to D4 only in the subsidiary scanning direction and converges the laser beams D1 to D4.

The first and second apertures 43 and 44 are disposed between the collimator lens 41 and the cylindrical lens (not shown). The first and second apertures 43 and 44 restrict the optical path width of the laser beams D1 to D4 having passed through the collimator lens 41 to enter the cylindrical lens. In the embodiment, four first apertures 43 are provided so as to correspond to the light emitting modules 261, respectively. On the other hand, one second aperture 44 is provided so as to be shared among the light source units 26 (light source). This helps reduce the number of components of the second aperture 44 and hence the manufacturing cost of the optical scanning device 5.

The scanning lenses 49a and 49b are lenses with fθ characteristics. One scanning lens 49a is provided so as to be shared among the photosensitive drums 1a to 1d. Four scanning lenses 49b are provided so as to correspond to the photosensitive drums 1a to 1d, respectively (see Figs. 2 and 3). The scanning lenses 49a and 49b are disposed between the photosensitive drums 1a to 1d and the polygon mirror 45 and image the laser beams D1 to D4 reflected by the polygon mirror 45 on the scanned surfaces of the corresponding photosensitive drums (image carrying members) 1a to 1d.

The laser beams D1 to D4 are deflected for scanning in the main scanning direction (direction Y1-Y2) by the polygon mirror 45. The laser beams D1 to D4 deflected by the polygon mirror 45 are directed, via optical elements such as the scanning lenses 49a and 49b and the reflection mirrors 52a to 52d, to the output mirrors 51a to 51d, respectively. The laser beams D1 to D4 reflected by the output mirrors 51a to 51d are shone on the photosensitive drums 1a to 1d in image forming portions Pa to Pd, respectively.

### [3. Configuration of Light Source Unit 26]

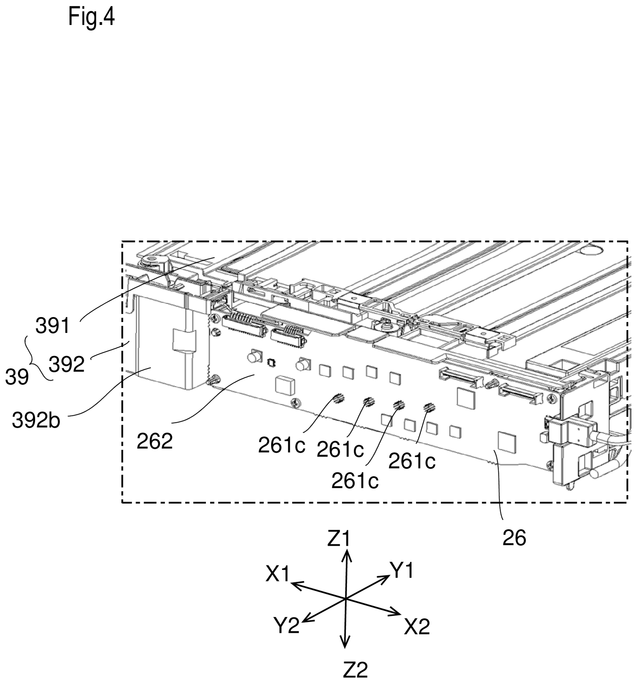

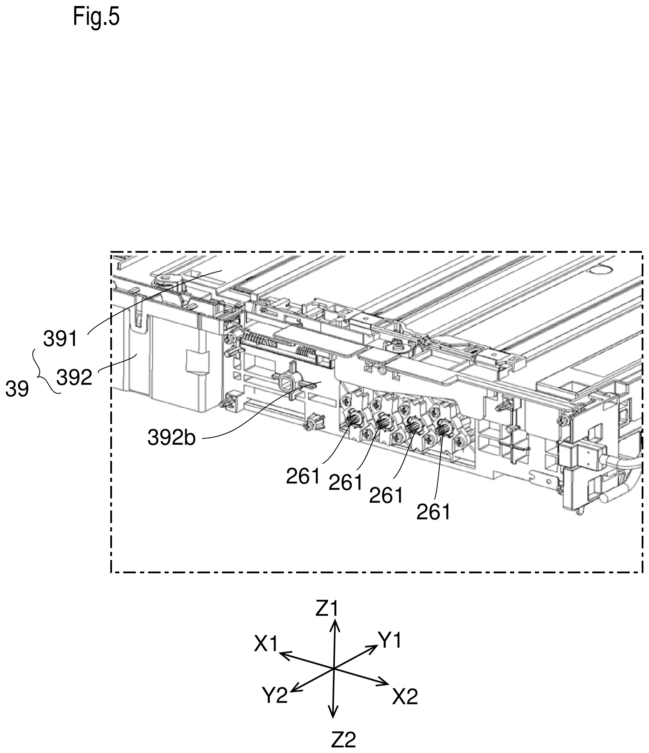

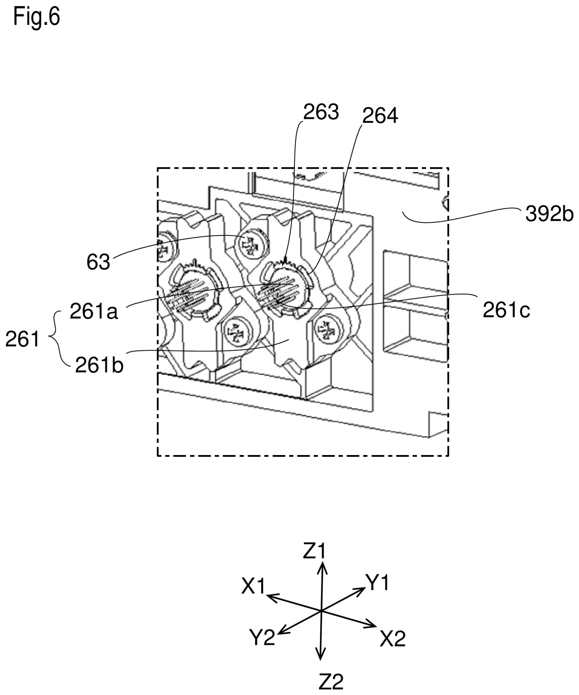

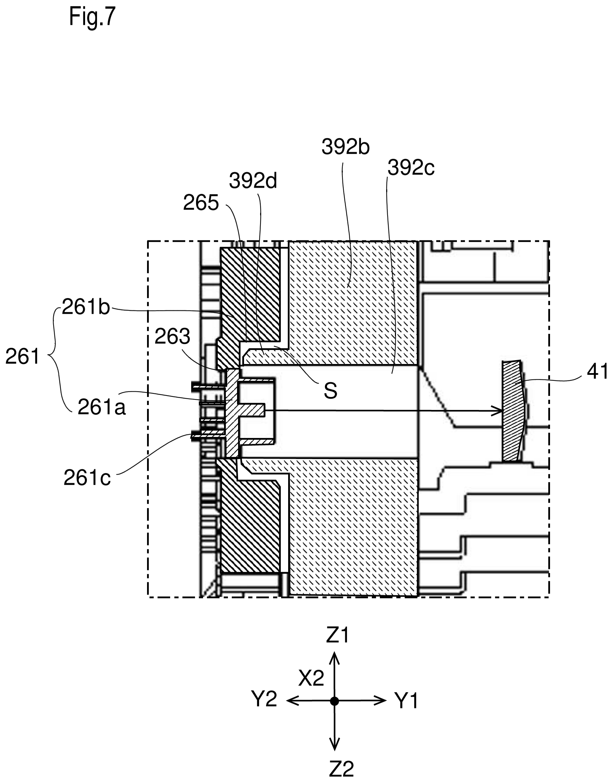

Figs. 4 and 5 are enlarged perspective views around the light source unit 26 in the optical scanning device 5, and Fig. 6 is an enlarged perspective view around the light emitting module 261. Fig. 7 is an enlarged side sectional view around the light emitting module 261. Note that, in Figs. 5, 6, and 7, the circuit board 262 is omitted.

In the embodiment, four light emitting modules 261 are provided so as to correspond to the image forming portions Pa to Pd described above. The light emitting module 261 each includes a laser diode 261a and a bracket 261b. Each laser diode 261a has a plurality of light emitting points that emit a laser beam. That is, the laser diode 261a employs a multibeam structure that can output a plurality of laser beams. Thus, it has two or more light emitting devices each comprising a semiconductor laser, and these laser diodes can individually emit light. With the laser diode 261a having a multibeam structure as described above, the optical scanning device 5 can achieve, in forming an electrostatic latent image, higher speed combined with higher resolution.

In the embodiment, each laser diode 261a is a leaded component insertion-mounted on the circuit board 262. The laser diode 261a is mounted with a plurality of terminals 261c of it inserted through the circuit board 262.

The circuit board 262 is fixed to the circumferential wall part 392b from outside the light emitting modules 261 (see Figs. 4 and 5). Meanwhile, the terminals 261c of the laser diode 261a are mounted on the circuit board 262. The circuit board 262 is a member on which various electronic components can be mounted, and is a printed circuit board comprising an electrically insulating board and electrically conductive patterns formed on the surface of or inside the board. In the embodiment, the circuit board 262 is in the form of a rectangular plate. The circuit board 262 also has an integrated circuit (IC) mounted on it constituting a driver circuit, a signal processing circuit, and the like.

The bracket 261b is formed of metal and has a holding hole 263 that holds the laser diode 261a. The laser diode 261a is held in the holding hole 263. In the embodiment, the laser diode 261a is lightly press-fitted in a circumferential part of the holding hole 263. Forming the bracket 261b using metal allows the heat of the laser diode 261a to dissipate efficiently via the bracket 261b to the ambient air and the circumferential wall part 392b.

In addition, lightly press-fitting the laser diode 261a to fix it to the bracket 261b allows the laser diode 261a to rotate circumferentially with respect to its optical axis for easy optical axis adjustment. It is also possible to finely adjust the direction of the laser beam emitted from the laser diode 261a with respect to the collimator lens 41 with ease. Moving the laser diode 261a in the main scanning direction (Y1-Y2) for fine adjustment permits the laser diode 261a to be fixed at an appropriate position with respect to the focal point of the collimator lens 41.

The bracket 261b has, at the circumferential part of the holding hole 263, a thin part 264. A plurality of thin parts 264 are disposed around the holding hole 263 (see Fig. 6). In the embodiment, the thin part 264 is formed by denting the outer face (the face toward Y2) of the bracket 261b, and four thin parts 264 are provided at equal intervals. Providing the thin part 264 eases light press-fitting in the circumferential part of the holding hole 263. This facilitates the optical axis adjustment and position adjustment for the laser diode 261a.

The circumferential wall part 392b of the accommodating portion 392 has light entrance holes 392c formed in it in which the laser diodes 261a are disposed (see Fig. 7). In the embodiment, the light entrance hole 392c penetrates the circumferential wall part 392b along the main scanning direction (Y1-Y2). The bracket 261b is fixed to the outer circumferential surface of the circumferential wall part 392b with the laser diode 261a inserted in the light entrance hole 392c formed in the circumferential wall part 392b.

Note that, while in the embodiment, the tip part of the laser diode 261a is disposed in the light entrance hole 392c, the laser beam emitted from the laser diode 261a need only pass through the light entrance hole 392c, and thus the laser diode 261a need not be disposed in the light entrance hole 392c.

The bracket 261b is screwed at two places across the holding hole 263 to the circumferential wall part 392b using screws 63. At that time, the bracket 261b is in contact at least with the circumferential wall part 392b at a circumferential part (contact part) of a threaded hole (not shown) through which the screw 63 is inserted. That is, the bracket 261b is in contact with the circumferential wall part 392b at least in circumferential parts (contact parts) of threaded holes (not shown) opposite each other across the holding hole 263. In a region except the contact parts, a space S is secured between the bracket 261b and the circumferential wall part 392b. Fixing the bracket 261b with it in contact at least with the circumferential parts (contact parts) of the two threaded holes (not shown) determines the direction of the optical axis of the laser diode 261a. At that time, it is possible, in optical axis adjustment, to accurately adjust the laser diode 261a along the main scanning direction (Y1-Y2) and along the left-right direction (direction X1-X2). In addition, owing to the space S formed in the region except the circumferential parts (contact parts) of the threaded holes (not shown), a passage for an air current can be secured easily.

Meanwhile, screwing the bracket 261b to the circumferential wall part 392b with its position adjusted along the main scanning direction (Y1-Y2) makes it possible to arrange the laser diode 261a at the focal point of the collimator lens 41. That is, providing the space S facilitates the position adjustment of the laser diode 261a along the main scanning direction (Y1-Y2) with respect to the focal point of the collimator lens 41. In addition, unscrewing the screws 63 allows the light emitting module 261 to be easily removed from the circumferential wall part 392b. This allows easy maintenance, replacement, and the like of the laser diode 261a alone.

The circumferential wall part 392b has a protruding part 392d that protrudes from a circumferential part of the light entrance hole 392c toward the bracket 261b (the emission direction Y1 of the laser beam). In the embodiment, the protruding part 392d is formed in a cylindrical shape. The bracket 261b has a recessed part 265. The recessed part 265 is recessed from a circumferential part of the holding hole 263 in a direction away from the circumferential wall part 392b (the direction Y2 opposite to the emission direction of the laser beam) and receives the protruding part 392d in it. Thus, the space S formed between the bracket 261b and the circumferential wall part 392b bends in the direction Y2 opposite to the emission direction of the laser beam between the recessed part 265 and the protruding part 392d.

With the space S having such a labyrinth structure, even when, as the polygon mirror 45 rotates at high speed, the internal pressure of the accommodating portion 392 drops, less dust tends to enter the accommodating portion 392 from outside. Thus, it is possible to suppress contamination of the mirror surface of the polygon mirror 45 with fine particles leading to degraded reflectance, and thereby to suppress degradation of optical performance.

The present disclosure is not limited to the embodiment described above, and thus any modification can be made without departing from the spirit of the present disclosure. For example, while, in the embodiment, the light emitting modules 261 are provided at four places so as to correspond to the image forming portions Pa to Pd, in a monochrome image forming apparatus 100, a light emitting module 261 can be provided at one place. Note that the arrangement of the color of the laser beams D1 to D4 is not particularly limited.

The present disclosure finds applications in optical scanning devices that form a latent image on a scanned face by irradiating and scanning it with light.

## Claims

1. An optical scanning device (5) comprising:
a light source unit (26) having a light emitting module (261) that emits a laser beam (D1, D2, D3, D4);
a collimator lens (41) that collimates the laser beam emitted from the light source unit into a parallel light beam;
a polygon mirror (45) that rotates about a rotation axis (J) extending along a top-bottom direction to reflect the laser beam emitted from the light source unit to scan a circumferential surface of an image carrying member (1a, 1b, 1c, 1d) in a main scanning direction; and
an accommodating portion (392) that houses the light source unit, the collimator lens, and the polygon mirror,
wherein
the accommodating portion has:
a bottom wall part (392a) that stretches in a direction crossing the rotation axis of the polygon mirror; and
a circumferential wall part (392b) that protrudes from a circumferential part of the bottom wall part and that surrounds, from radially outside, the collimator lens and the polygon mirror,
the light emitting module includes:
a laser diode (261a) that has a plurality of light emitting points that emit the laser beam; and
a bracket (261b) that has a holding hole that holds the laser diode,
the bracket is fixed to an outer circumferential surface of the circumferential wall part with the laser diode inserted in a light entrance hole (392c) formed in the circumferential wall part,
the circumferential wall part has:
a protruding part (392d) that protrudes from a circumferential part of the light entrance hole toward the bracket,
the bracket has:
a recessed part (265) recessed from a circumferential part of the holding hole in a direction away from the circumferential wall part with the protruding part disposed in the recessed part receiving, and
a space formed between the bracket and the circumferential wall part bends in a direction opposite to an emission direction of the laser beam between the recessed part and the protruding part.

2. The optical scanning device according to claim 1, wherein
the laser diode is lightly press-fitted in a circumferential part of the holding hole.

3. The optical scanning device according to claim 2, wherein
the bracket has, at the circumferential part of the holding hole, a thin part (264) in which a thickness of the bracket is reduced toward the emission direction of the laser beam, and
a plurality of the thin parts are disposed around the holding hole.

4. The optical scanning device according to claim 1, wherein
the bracket is formed of metal.

5. The optical scanning device according to claim 1, wherein
the light source unit has a plurality of the light emitting modules corresponding to a plurality of the image carrying members.

6. The optical scanning device according to claim 1, wherein
the bracket is in contact with the circumferential wall part at least in contact parts disposed opposite each other across the holding hole.

7. The optical scanning device according to claim 1 further comprising:
a mirror cover (45a) that covers the polygon mirror.

8. An image forming apparatus (100) comprising:
the optical scanning device according to claim 1;
the image carrying member having a photosensitive layer formed on a surface thereof; and
a charging device (2a, 2b, 2c, 2d) that electrostatically charges the image carrying member to a predetermined surface potential,
the optical scanning device shining light to a surface of the image carrying member electrostatically charged by the charging device to form an electrostatic latent image through attenuation of electric charge.
